# EUROPÄISCHE PATENTANMELDUNG

(11) **EP 0 554 845 A1**
(43) Veröffentlichungstag der Anmeldung: **11.08.1993**
(21) Anmeldenummer: 93101629.9
(22) Anmeldetag: 03.02.1993
(51) Int. Cl.: C03B 37/014, C03B 37/018

(54) **Verfahren und Vorrichtung zum Herstellen von aussenbeschichteten Glaskörpern zur Herstellung von Lichtwellenleitern**

(30) Priorität: 06.02.1992 DE 4203369
(71) Anmelder: CeramOptec GmbH, D-53121 Bonn (DE)
(72) Erfinder:
(74) Vertreter: Schwarz, Klaus-Jürgen, Dipl.-Ing.

(57) **Zusammenfassung**

Bei dem Verfahren wird das Gas für die reaktive Abscheidung des Glasmaterials durch einen den stab- oder rohrförmigen Ausgangskörper (1) umgebenden Kanal (2) geleitet. Für die Außenbeschichtung des Ausgangskörpers (1) wird in dem Kanal (2) eine den Ausgangskörper umgebende Plasmazone (3) durch einen Resonator (4) erzeugt, wobei eine Abscheidung von Glasmaterial an der Innenwand des Kanals (2) entweder dadurch verhindert oder zumindest minimiert wird, daß die Feldstärke des Resonators (4) an der Innenseite des Kanals (2) gering ist. In einer anderen Ausführungsform kann an der Innenseite des Kanals (2) eine Schutzgasschicht, wie eine Sauerstoffströmung, aufrechterhalten werden, so daß an der Innenwand des den Ausgangskörper (1) umgebenden Kanals (2) keine wesentliche Abscheidung von Glasmaterial erfolgt. Hierdurch können insbesondere Vorformen zur Herstellung von Lichtwellenleitern mit großem Kern/Mantelverhältnis in kontrollierten Atmosphären mit gutem Gasausnutzungsgrad hergestellt werden.

## Beschreibung

Die Erfindung betrifft ein Verfahren zum Herstellen von außenbeschichteten stab- oder rohrförmigen Glaskörpern oder Vorformen zur Herstellung von Lichtwellenleitern nach dem Oberbegriff des Anspruches 1 und bezieht sich ferner auf eine Vorrichtung zum Durchführen dieses Verfahrens.

In DE 24 44 100 C3 ist ein Verfahren zum Herstellen von innenbeschichteten Glasrohren zum Ziehen von aus einem dotierten Kern und einem undotierten Mantel bestehenden Lichtleitfasern durch reaktive Abscheidung des Kernmaterials aus einem Gas, das durch das Rohr geleitet wird, auf der Innenwand des Rohres mittels einer Plasmazone beschrieben, wobei zwischen dem Rohr und der plasmaerregenden Vorrichtung in Achsrichtung eine Relativbewegung erfolgt. Die reaktive Abscheidung wird hierbei unter einem Druck von 1 bis 10 Torr vorgenommen, wobei der Plasmazone eine Temperaturzone überlagert wird. Dieses bekannte Verfahren ermöglicht es zwar auch, die reaktive Abscheidung zugleich auf einem Quarzfaden oder Quarzstab vorzunehmen, der im Inneren des Rohres angeordnet ist. Hierdurch können jedoch insbesondere für die Herstellung von Lichtleitfasern mit großem Kern/Mantelverhältnis geeignete Glaskörper oder Vorformen mit dotierter oder undotierter Außenbeschichtung nicht rasch bzw. wirtschaftlich hergestellt werden.

In DE 36 32 684 A1 ist weiterhin eine Resonatorform angegeben, mit Hilfe derer unter anderem das Verfahren nach DE 24 44 100 C3 durchgeführt werden kann.

Dieses Verfahren bietet gegenüber alternativen Verfahren, bei denen eine Vorform durch Abscheidung einer Mantelschicht auf einem Ausgangsstab mittels eines Plasmabrenners hergestellt wird, den Vorteil einer besseren Kontrollierbarkeit der Prozeßgase bzw. des Fernhaltens von Verunreinigungen wegen des abgeschlossenen Reaktionsraums. Ein Nachteil des Innenabscheidungsverfahrens nach DE 24 44 100 C3 und DE 36 32 684 A1 liegt jedoch in der großen abzuscheidenden Glasmasse, insbesondere wenn Vorformen mit einem großen Kern/Mantelverhältnis hergestellt werden sollen.

Während für den Fall der Nachrichtenübertragung die lichtführenden Kerne im Vergleich zur Gesamtfaser klein gehalten werden und daher die Abscheidung in einem Rohr (wie im oben genannten Verfahren) zweckmäßig erscheint, werden für andere Zwecke, zum Beispiel in der Laserleistungsübertragung oder in der Sensorik, Fasern mit einem großen, meist undotierten Kerndurchmesser und relativ dünnem, meist fluor-dotierten Mantel verwendet. Hier ist es daher sinnvoll, von einem (undotierten) kommerziell verfügbaren, hochreinen Quarzglasstab auszugehen und nur eine relativ dünne dotierte Schicht auf dessen Außenseite abzuscheiden. Dies ist unter Anwendung der bekannten Verfahren jedoch nicht mit gutem Wirkungsgrad möglich, da die Hauptabscheidung stets auf der Innenseite des umgebenden Rohres erfolgt und damit ein Großteil des eingeleiteten Gasgemisches dafür verbraucht wird.

Außenbeschichtete Quarzstäbe werden daher üblicherweise durch Außenbeschichtung mittels atmosphärischer Plasmabrenner hergestellt. Ein Nachteil dieser Verfahren liegt jedoch in der Umweltbelastung bzw. den aufwendigen Maßnahmen zur Erhaltung der Reinheit der abgelagerten Substanz trotz der offenen Atmosphäre.

Aus DE 33 31 899 A1 ist noch ein Verfahren zur Herstellung von Schichten aus der Gasphase, insbesondere eines Glaskörpers für die Bildung einer Vorform für das Ziehen von Lichtleitfasern bekannt. Dieses Verfahren beruht auf der induktiven Erzeugung von Plasmen (Theta-Pinch-Anordnung) in einem Raum zwischen dem zu beschichtenden Innenstab und einem Außenrohr. Diese, aus der Fusionsforschung bekannte Theta-Pinch-Methode soll dabei gleichzeitig zur Erzeugung wie zur Kompression des Plasmas verwendet werden.

Der entscheidende Nachteil dieser Methode ist darin begründet, daß bei einer induktiven Entladung mit einer, das zylindrische Reaktionsgefäß umgebenden Spule die größte elektrische Feldstärke am äußeren Gefäßrand in Spulennähe induziert wird. Dies führt zur Zündung des Plasmas am inneren Rand des äußeren Rohres und damit vorzugsweise dort zur - in diesem Fall unerwünschten - Schichtbildung.

Eine zusätzliche radiale Kompression hin zur Oberfläche des Innenstabes oder des Innenrohres tritt nur bei sehr starken induzierten Strömen und nahezu voll ionisiertem Plasma auf.

Beide Effekte sind unerwünscht, da hierfür eine, wie bei Theta-Pinchen üblich, sehr hohe elektrische Leistung notwendig ist, was einen kontinuierlichen Betrieb nahezu unmöglich macht. Eine starke Ionisierung verhindert die gewünschten chemischen Prozesse, da die angeregten und teilweise gespaltenen Moleküle zerstört werden. Eine Relativbewegung zwischen dem Grundkörper und der Theta-Pinch-Anordnung ist im übrigen nicht vorgesehen.

Der Erfindung liegt die Aufgabe zugrunde, ein Verfahren der gattungsgemäßen Art anzugeben, mit dem insbesondere Vorformen mit großem Kern/Mantelverhältnis in kontrollierten Atmosphären mit gutem Gasausnutzungsgrad hergestellt werden können.

Diese Aufgabe wird gemäß der Erfindung dadurch gelöst, daß das Gas für die reaktive Abscheidung des Glasmaterials durch einen den Ausgangskörper umgebenden Kanal geleitet wird, in dem eine den Ausgangskörper umgebende Plasmazone durch einen Resonator erzeugt wird, und daß eine Abscheidung von Glasmaterial an der Innenwand des Kanals entweder dadurch verhindert oder zumindest minimiert wird, daß die Feldstärke des Resonators an der Innenseite des Kanals gering ist und/oder daß eine Schutzgasschicht an der Innenseite des Kanals aufrechterhalten wird.

Das erfindungsgemäße Verfahren hat den Vorteil, daß der stab- oder rohrförmige Ausgangskörper für die reaktive Abscheidung des Glasmaterials in dem umgebenden Kanal genau zentrisch angeordnet werden kann, so daß auch die den Ausgangskörper umgebende Plasmazone sich über den gesamten Umfang des Ausgangskörpers gleichmäßig ausbildet und hierdurch sicherstellt, daß auf diese Weise Vorformen mit einem großen Kern/Mantelverhältnis in kontrollierter Atmosphäre mit einem besonders hohen Gasausnutzungsgrad und hoher Qualität für die Weiterverarbeitung zu Lichtleitfasern hergestellt werden können.

Besonders vorteilhafte Ergebnisse werden erzielt, wenn die reaktive Abscheidung des Glasmaterials auf dem Ausgangskörper bei einem Druck von 1 bis 12 Torr erfolgt und der Plasmazone eine Temperaturzone überlagert wird.

Der Gasausnutzungsgrad kann auch noch dadurch verbessert werden, daß an der Innenseite des den Ausgangskörper umgebenden Kanals von der plasmaerregenden Vorrichtung ein E-Feld erzeugt wird, das einen im Vergleich zur Außenseite des Ausgangskörpers niedrigen Wert bzw. einen Null-Durchgang aufweist, so daß an der Innenwand des den Ausgangskörper umgebenden Kanals keine wesentliche Abscheidung von Glasmaterial erfolgt. Letzteres kann alternativ auch dadurch erreicht werden, daß an der Innenseite des den Ausgangskörper umgebenden Kanals zum Beispiel eine Sauerstoffströmung aufrechterhalten wird, während das Reaktionsgas in der Innenzone am Ausgangskörper entlangströmt, so daß auch durch diese Maßnahme an der Innenseite des den Ausgangskörper umgebenden Kanals keine wesentliche Abscheidung von Glasmaterial stattfindet.

In einer bevorzugten Ausführungsform der Erfindung kann auf der Außenseite des Ausgangskörpers fluor- und/oder bor-dotiertes SiO2 abgeschieden werden, wobei die Konzentration mindestens eines Dotierungsbestandteils (Fluor oder Bor) über einen wesentlichen Teil der am Ausgangskörper abgelagerten Schicht konstant gehalten wird oder kontinuierlich nach außen hin zunimmt.

Eine besonders vorteilhafte Vorrichtung zum Durchführen des erfindungsgemäßen Verfahrens besteht aus einer den Ausgangskörper umgebenden, gegenüber diesem in Achsrichtung relativ bewegbaren plasmaerregenden Vorrichtung und ist dadurch gekennzeichnet, daß der Ausgangskörper in der plasmaerregenden Vorrichtung von einem rohrförmigen Kanal mit einer gasdurchlässigen Wand umgeben ist.

Durch diese Ausbildung gelingt es überraschenderweise, die Ablagerung auf der Innenseite des gasführenden Kanals zu vermeiden und ein Maximum der Abscheidung auf der Außenseite des als Ausgangskörper eingesetzten Stabes oder Rohres zu erreichen.

Die Ablagerung auf der Innenseite des gasführenden Kanals kann ebenfalls durch die Beeinflussung der Strömung an der inneren Kanalwand verhindert werden, was dadurch erreicht wird, daß der Kanal mit der gasdurchlässigen Wand auf der Außenseite von einem zweiten axialsymmetrischen Rohr umgeben ist, wobei eine Druckdifferenz über der gasdurchlässigen Wand besteht.

Der den Ausgangskörper umgebende Kanal besteht vorteilhafterweise aus wasserarmen Dielektrika, wie Quarzglas und/oder Keramik.

Zur Plasmaerzeugung kann vorteilhafterweise ein Resonator des Typs E020 vorgesehen sein, der sich innerhalb eines Ofens um den den Ausgangskörper umgebenden Kanal auf- und abbewegt.

Bevorzugte Ausführungsbeispiele der Erfindung sind in der Zeichnung schematisch dargestellt. Es zeigen
- Fig. 1: einen Längsschnitt durch eine Vorrichtung zum Herstellen von außenbeschichteten stab- oder rohrförmigen Glaskörpern für die Herstellung von Lichtwellenleitern mit einer plasmaerregenden Vorrichtung,
- Fig. 2: einen Querschnitt durch diese Vorrichtung,
- Fig. 3: den Gesamtaufbau der Vorrichtung mit einem Ofen und
- Fig. 4: Einzelheiten einer abgewandelten Ausführungsform der Vorrichtung.

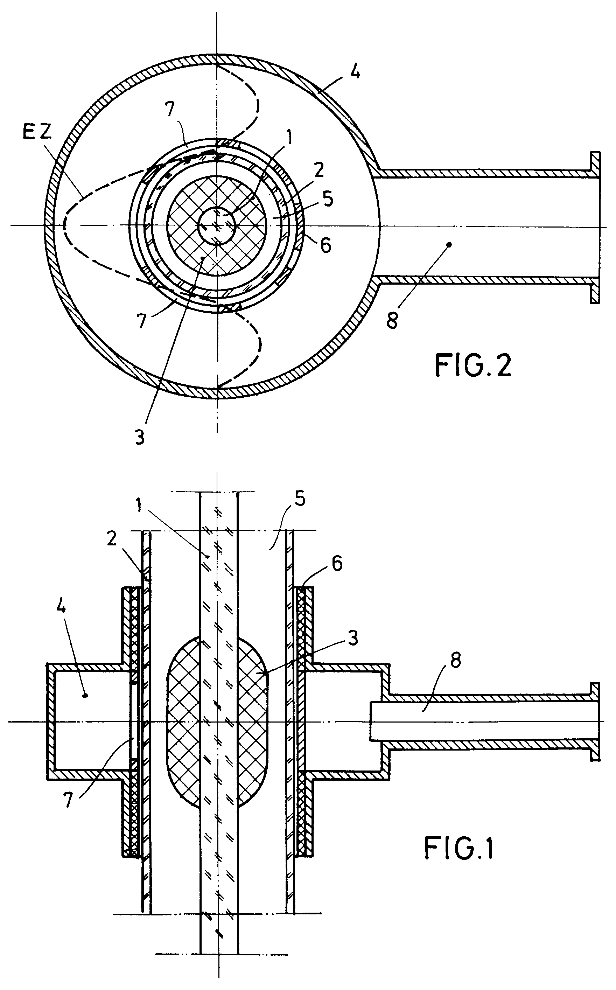

Die in Fig. 1 und 2 gezeigte Vorrichtung zum Herstellen von außenbeschichteten stab- oder rohrförmigen Glaskörpern als Ausgangskörper oder Vorformen 1 für die Herstellung von Lichtwellenleitern besteht aus einem rohrförmigen Kanal 2, der den stab- oder rohrförmigen Ausgangskörper 1 aus dotiertem oder undotiertem Quarzglas umgibt, auf dem in einer Plasmazone 3, die von einem den Kanal 2 ringförmig umgebenden Resonator 4 erzeugt wird, aus einem reaktiven Gas, das den Ringraum 5 zwischen dem Ausgangskörper 1 und dem rohrförmigen Kanal 2 durchströmt, abgeschieden wird.

Ein den Kanal 2 konzentrisch umgebender Absorber 6 begrenzt die Abstrahlung nach außen, wobei durch geeignete Fenster 7 an dem Resonator 4 eine homogene Feldstärkenverteilung erreicht wird. Ein Hohlleiter 8 speist den Resonator 4.

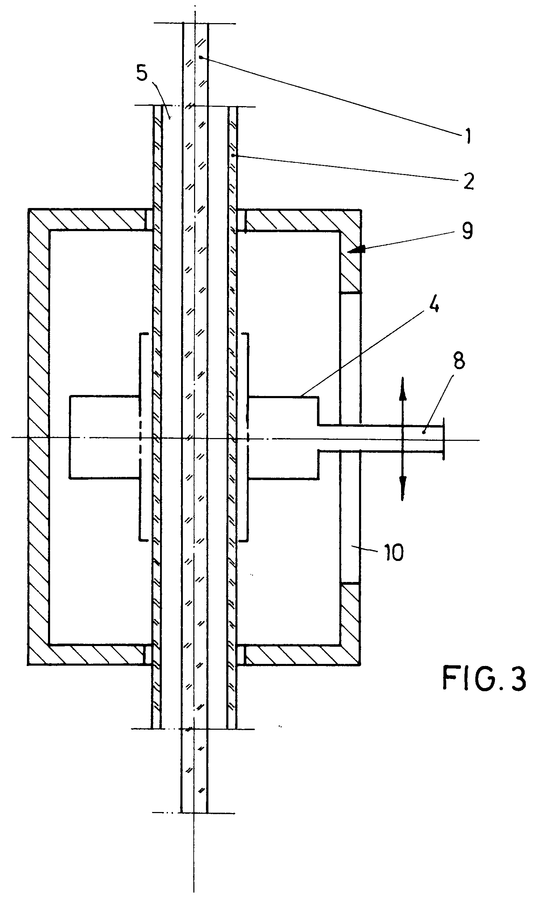

Fig. 3 zeigt den Gesamtaufbau der Vorrichtung schematisch. Die gesamte Anordnung aus stab- oder rohrförmigem Ausgangskörper 1 mit Kanal 2 und Resonator 4 sitzt in einem Ofen 9 mit einem senkrechten oder waagerechten seitlichen Längsschlitz 10, in dem sich der Resonator 4 mit dem Hohlleiter 8 auf und ab oder hin und her bewegt. Der Hohlleiter 8 speist die Mikrowellenenergie ein.

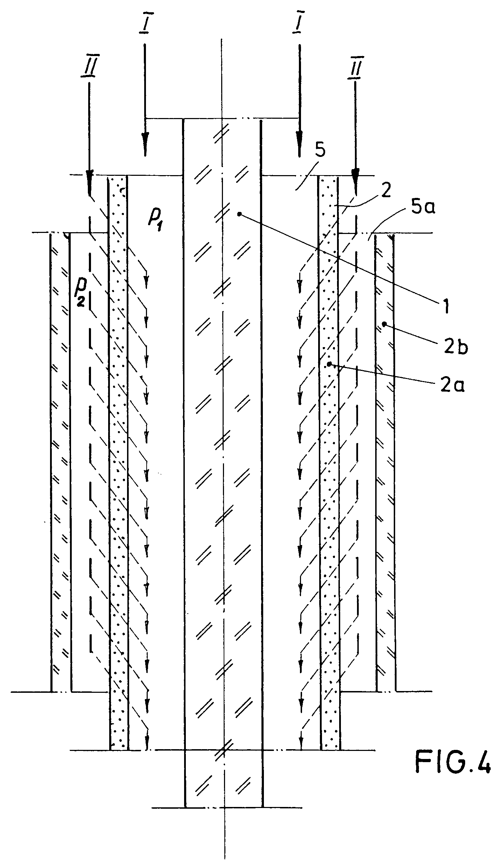

Fig. 4 zeigt eine weiter abgewandelte Ausführungsform der Vorrichtung, bei der der stab- oder rohrförmige Ausgangskörper 1 von einem rohrförmigen Kanal 2 mit einer gasdurchlässigen Wand 2a umgeben ist, der seinerseits von einem zweiten axialsymmetrischen Rohr 2b umgeben ist, wobei eine Druckdifferenz über der gasdurchlässigen Wand 2a besteht.

Der Ausgangskörper 1 ist im Inneren des Kanals 2 mit der gasdurchlässigen Wand 2a von einer Gasströmung I mit einem Druck P1 umgeben. Im äußeren Ringraum 5a zwischen dem Kanal 2 und dem diesen konzentrisch umgebenden Rohr 2b strömt ein Schutzgas II, vorzugszweise Sauerstoff. Durch geeignete Druckdifferenz P2 minus P1 über der gasdurchlässigen Wand 2a des Kanals 2 strömt das Schutzgas II von der Außenseite längs der inneren Wand 2a des Kanals 2. Durch diese Schutzgasschicht wird gasdynamisch die Abscheidung von Glasmaterial an der Innenseite des Kanals 2 verhindert.

Als plasmaerzeugende Vorrichtung wird vorzugsweise ein Resonator 4 der Form E020 mit derartigen Dimensionen und so abgestimmt eingesetzt, daß die Feldstärke des Resonators an der Innenseite des Kanals 2 gering ist und an der Außenseite des stab- oder rohrförmigen Quarzglaskörpers einen sehr hohen Wert erreicht, wie an Hand der in Fig. 2 eingezeichneten Feldverteilungskurve EZ für das E-Feld des Resonators 4 zu erkennen ist.

Als Beispiel ist es gelungen, fluor-dotierte Schichten mit einem Fluorgehalt von 2,5 Gew.% auf einem Quarzglasstab vom Durchmesser 18 mm abzulagern, wobei die Dimension des umgebenden Quarzglaskanals 2 einen Innendurchmesser von 50 mm aufwies. Dabei wurde eine Mikrowellenfrequenz von 2,5 GHz aus einem HF-Generator eingestrahlt. Die Temperaturen des Quarzglasstabes bei der Abscheidung des Glasmaterials wurden mit etwa 1200 °C bzw. etwa 1500 K ermittelt. Die eingesetzten Gase wurden zu 80 % bis 100 % bei einem Gasdruck von 8 Torr ausgenutzt.

Dieses Verfahren erlaubt es auch, sogenannte Gradientenfasern herzustellen, indem aufeinanderfolgende abgelagerte Schichten im Brechungsindex nach außen hin kontinuierlich abgesenkt werden.

Statt eines reinen Quarzglaskerns kann auch ein dotierter Stab oder ein dotiertes Rohr als Ausgangskörper 1 verwendet werden. Die Brechungsindizes der abgelagerten Schichten werden dann durch geeignete Dotierungsbeigaben entsprechend verändert.

### Liste der Bezugszeichen

- 1: Ausgangskörper, Vorform
- 2: Kanal
- 2a: Wand, gasdurchlässig
- 2b: Rohr
- 3: Plasmazone
- 4: Resonator
- 5: Ringraum
- 5a: Ringraum
- 6: Absorber
- 7: Fenster
- 8: Hohlleiter
- 9: Ofen
- 10: Längsschlitz
- EZ: Feldverteilungskurve
- I: Gasströmung
- II: Schutzgas

## Patentansprüche

1. Verfahren zum Herstellen von außenbeschichteten stab- oder rohrförmigen Glaskörpern oder Vorformen mit einer reaktiven Abscheidung von Glasmaterial aus einem Gas auf einem stab- oder rohrförmigen Ausgangskörper (1) aus dotiertem oder undotiertem Quarzglas zum Ziehen von aus einem Kern und im Brechungsindex niedrigerem Mantel bestehenden Lichtwellenleitern, wobei während der reaktiven Abscheidung des Glasmaterials auf dem Glaskörper eine Relativbewegung in axialer Richtung zwischen dem Glaskörper und der die Abscheidung bewirkenden Vorrichtung erfolgt, **dadurch gekennzeichnet,** daß das Gas für die reaktive Abscheidung des Glasmaterials durch einen den Ausgangskörper (1) umgebenden Kanal (2) geleitet wird, in dem eine den Ausgangskörper (1) umgebende Plasmazone (3) durch einen Resonator (4) erzeugt wird, und daß eine Abscheidung von Glasmaterial an der Innenwand des Kanals (2) entweder dadurch verhindert oder zumindest minimiert wird, daß die Feldstärke des Resonators (4) an der Innenseite des Kanals (2) gering ist und/oder daß eine Schutzgasschicht an der Innenseite des Kanals (2) aufrechterhalten wird.

2. Verfahren nach Anspruch 1, **dadurch gekennzeichnet,** daß die reaktive Abscheidung des Glasmaterials auf dem Ausgangskörper (1) bei einem Druck von 1 bis 12 Torr erfolgt und der Plasmazone (3) eine Temperaturzone überlagert wird.

3. Verfahren nach Anspruch 1 oder 2, **dadurch gekennzeichnet,** daß an der Innenseite des den Ausgangskörper (1) umgebenden Kanals (2) von der plasmaerregenden Vorrichtung ein E-Feld erzeugt wird, das einen im Vergleich zur Außenseite des Ausgangskörpers (1) niedrigen Wert bzw. einen Null-Durchgang aufweist, so daß an der Innenwand des den Ausgangskörper (1) umgebenden Kanals (2) keine wesentliche Abscheidung von Glasmaterial erfolgt.

4. Verfahren nach Anspruch 1 oder 2, **dadurch gekennzeichnet,** daß an der Innenseite des den Ausgangskörper (1) umgebenden Kanals (2) eine Sauerstoffströmung (Schutzgas II) aufrechterhalten wird, während das Reaktionsgas (Gasströmung I) in der Innenzone am Ausgangskörper (I) entlangströmt, so daß an der Innenseite des den Ausgangskörper (1) umgebenden Kanals (2) keine wesentliche Abscheidung von Glasmaterial erfolgt.

5. Verfahren nach einem der Ansprüche 1 bis 4, **dadurch gekennzeichnet,** daß auf der Außenseite des Ausgangskörpers (1) fluor- und/oder bordotiertes SiO2 abgeschieden wird.

6. Verfahren nach Anspruch 5, **dadurch gekennzeichnet,** daß die Konzentration mindestens eines Dotierungsbestandteils (Fluor oder Bor) über einen wesentlichen Teil der am Ausgangskörper (1) abgelagerten Schicht konstant gehalten wird.

7. Verfahren nach Anspruch 5, **dadurch gekennzeichnet,** daß die Konzentration mindestens eines Dotierungsbestandteils (Fluor oder Bor) über einen wesentlichen Teil der an dem Ausgangskörper (1) abgelagerten Schicht kontinuierlich nach außen hin zunimmt.

8. Vorrichtung zum Durchführen des Verfahrens nach Anspruch 1, bestehend aus einer den Ausgangskörper (1) umgebenden, gegenüber diesem in Achsrichtung relativ bewegbaren plasmaerregenden Vorrichtung, **dadurch gekennzeichnet,** daß der Ausgangskörper (1) in der plasmaerregenden Vorrichtung von einem rohrförmigen Kanal (2) mit einer gasdurchlässigen Wand (2a) umgeben ist.

9. Vorrichtung nach Anspruch 8, **dadurch gekennzeichnet,** daß der Kanal (2) mit der gasdurchlässigen Wand (2a) auf der Außenseite von einem zweiten axialsymmetrischen Rohr (2b) umgeben ist, wobei eine Druckdifferenz über der gasdurchlässigen Wand (2a) besteht.

10. Vorrichtung nach Anspruch 8, **dadurch gekennzeichnet,** daß der den Ausgangskörper (1) umgebende Kanal (2) aus wasserarmen Dielektrika, wie Quarzglas und/oder Keramik, besteht.

11. Vorrichtung nach einem der Ansprüche 8 bis 10, **dadurch gekennzeichnet,** daß ein Resonator (4) des Typs E020 zur Plasmaerzeugung vorgesehen ist.

12. Vorrichtung nach Anspruch 11, **dadurch gekennzeichnet,** daß sich der Resonator (4) innerhalb eines Ofens (9) um den den Ausgangskörper (1) umgebenden Kanal (2) auf- und abbewegt.
